Europäisches Patentamt

European Patent Office

Office européen des brevets

(19)

(11) EP 1 473 844 A1

(12) EUROPEAN PATENT APPLICATION

(43) Date of publication:
03.11.2004 Bulletin 2004/45

(51) Int Cl.⁷: **H04B 1/40**, H04B 1/28

(21) Application number: 03009546.7

(22) Date of filing: 28.04.2003

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **Sony Ericsson Mobile Communications AB**
**221 88 Lund (SE)**

(72) Inventors:
• Repin, Alexander,
  Sony Ericsson Mobile Com. AB
  85609 Aschheim-Dornach (DE)
• Kozlov, Vladimir, Sony Ericsson Mobile Com. AB
  85609 Aschheim-Dornach (DE)

(74) Representative: Rupp, Christian, Dipl.Phys. et al
Mitscherlich & Partner
Patent- und Rechtsanwälte
Sonnenstrasse 33
80331 München (DE)

(54) **Analog front end for a digital dual-band intermediate frequency sampling receiver**

(57) The invention relates to the field of multi-standard receiver that can be applied to wireless multi-mode transceivers in a cellular communication system. It particularly refers to an analog front end of a digital dual-mode intermediate frequency (IF) sampling receiver architecture with two reception chains (401, 403, 404, 405 and 401, 403, 406, 407) and a signal processing chain (410, 411, 412, 413) for selectively receiving, processing and down-converting modulated RF signal spectra of a first (GSM/ GPRS (DCS) 1,800 MHz Rx, GSM/ GPRS (PCS) 1,900 MHz Rx, and UMTS TDD Rx) or a second frequency band (GSM/GPRS 850 MHz Rx, GSM/GPRS 900 MHz Rx) from the passband to a common IF band, which can advantageously be applied to a wireless communication device in a cellular telecommunication system based on UMTS or GSM/GPRS technology.

The IF sampling receiver architecture thereby comprises means (408, 408a) for up-converting the modulated RF signal spectrum of a second frequency band (GSM/GPRS 850 MHz Rx, GSM/GPRS 900 MHz Rx) to a first frequency band (GSM/GPRS (DCS) 1,800 MHz Rx, GSM/GPRS (PCS) 1,900 MHz Rx, and UMTS TDD Rx) and switching means (409) for selectively switching either the modulated RF signal spectrum of said first or said second frequency band (GSM/GPRS 850 MHz Rx, GSM/GPRS 900 MHz Rx) to a common signal processing chain for further processing. According to a further aspect of the invention, a sigma-delta analog-to-digital converter 414 (SDADC) is connected to the output port of the signal processing chain (410, 411, 412, 413), which provides a time- and amplitude-quantized time-domain representation of the down-converted RF signal spectrum of either said first or second frequency band, which allows to obtain high linearity and signal-to-noise ratio (SNR) by means of oversampling and spectral shaping of the quantization noise.

Fig. 4

EP 1 473 844 A1

**Description**

**FIELD AND BACKGROUND OF THE INVENTION**

The present invention generally relates to the field of multi-standard RF receivers that can advantageously be applied to wireless multi-mode transceivers in a cellular communication system. It particularly refers to an analog front end of a digital dual-mode intermediate frequency (IF) sampling receiver architecture with two reception chains and a common signal processing chain for selectively receiving, processing and down-converting modulated RF signal spectra of a first ( f.e. GSM/GPRS (DCS) 1,800 MHz Rx, GSM/GPRS (PCS) 1,900 MHz Rx, UMTS TDD1/2 Rx, and UMTS FDD Rx) or second frequency band (f.e. GSM/GPRS 850 MHz RX and GSM/GPRS 900 MHz Rx) from the passband to a common intermediate frequency (IF) band, which can advantageously be applied to a wireless communication device in a cellular telecommunication system based f.e. on UMTS or GSM/GPRS technology.

The evolution of wireless communications in the area of cellular telephony and wireless local area networks (WLANs) has led to a multiplicity of wireless standards. For this reason, there is an increasing demand for mobile terminals being able to cope with different standards. Especially wideband multi-standard radio frequency (RF) transceivers working in the frequency range between 850 MHz and 5,200 MHz are predicted to play an important role in future wireless communications. With cellular and cordless phone standards operating in the 900-MHz and 1.8-GHz bands, the Global Positioning System (GPS) in the 1.5-GHz band, and WLANs in the 2.4-GHz band, it is desirable to combine two or more standards in a single mobile unit. Since new generation terminals are equipped to support data transmission via UMTS and GSM/GPRS, multi-standard transceivers working in the UMTS Frequency-Division Duplex (FDD) and UMTS Time-Division Duplex ('TDD) frequency bands that provide a quad-band functionality for the GSM/GPRS standard (GSM/GPRS 850 MHz, GSM/ GPRS 900 MHz, GSM/GPRS (DCS) 1,800 MHz, GSM/GPRS (PCS) 1,900 MHz) in both uplink (Tx) and downlink (Rx) direction are needed. The principal challenge in this task thereby arises from stringent cost and form-factor requirements, which make it necessary to work in a wide frequency range with minimal amounts of replicated hardware components, in particular concerning filters, resonators, oscillators, and frequency synthesizers.

In today's wireless communication devices, three types of receiver architectures are typically used: the heterodyne receiver, the direct-conversion receiver, and the low intermediate frequency (IF) receiver. In order to better understand the proposed approach of the solution according to the present invention, the main characteristics, advantages and drawbacks of the aforementioned receiver architectures and the concept of software-defined radio (SDR) will be shortly explained in the following.

Many modern RF receivers rely on traditional heterodyne architectures, which translate the signal of interest to an intermediate frequency (IF) before it is down-converted to the baseband. A heterodyne receiver requires two or more local oscillators (LOs) and external filters, including a channel-select filter at a high frequency band. Said filters are usually implemented with discrete components. Conventional superheterodyne receiver architectures typically comprise two or three down-conversions stages to provide channel sensitivity and selectivity needed for the respective receiver. A triple-conversion superheterodyne receiver architecture 100a according to the state of the art - a heterodyne receiver with three IF stages - is depicted in Fig. la. For each down-conversion stage, a local oscillator 106a,b,c, a down-conversion mixer 108a,b,c, band-pass filtering and low-noise amplification means 104a,b,c are required, which increase hardware complexity, cost and difficulty of manufacture. Therefore, this receiver architecture is not suitable for a single-chip integrated circuit design. However, since superheterodyne receivers have good performance, especially regarding image rejection capability and channel selectivity, they are used in a wide variety of applications.

In contrast thereto, homodyne or direct-conversion receiver architectures require fewer discrete components and achieve a higher integration level. Nevertheless, this architecture involves several drawbacks. For instance, DC offset due to self-mixing and flicker noise in the analog baseband circuits - a type of low-frequency noise with a spectral power density being inversely proportional to the frequency, that typically occurs in conventional semiconductor devices - substantially corrupt the baseband signal. In direct-conversion quadrature receivers, that use two distinct channels to form the in-phase (I) and quadrature (Q) components of the received signal, the baseband signal constellation of the obtained quadrature signals is severely deteriorated by I/Q mismatches, which significantly degrade signal-to-noise (S/N) performance. Whereas I/Q mismatches can be reduced through a careful circuit design and fabrication procedure, both DC offset and flicker noise problems are still difficult to deal with and require further efforts to overcome.

Direct IF receivers take advantage of undersampling to eliminate one or more of the tuned analog IF stages. The employed analog-to-digital converter (ADC) thereby acts as a mixer which down-converts the IF signal to the baseband for digital processing. While ADC technology has improved significantly over time, only a few of the ADCs that are on the market today are able to provide the performance needed for IF sampling applications. According to the Nyquist sampling theorem, the sampling rate $f_s$ of an ADC must be at least twice the maximum frequency $f_{max}$ of the band-limited signal to be sampled in order to have the signal be uniquely reconstructed without aliasing. However, a higher sampling rate $f_s$ is often instrumental in reducing the required selectivity and hence the cost and complexity of an analog anti-aliasing filter. Furthermore, resolution and dynamic performance are degraded as compared to lower-speed alternatives, and power dissipation of the ADC may also increase with the sampling rate.

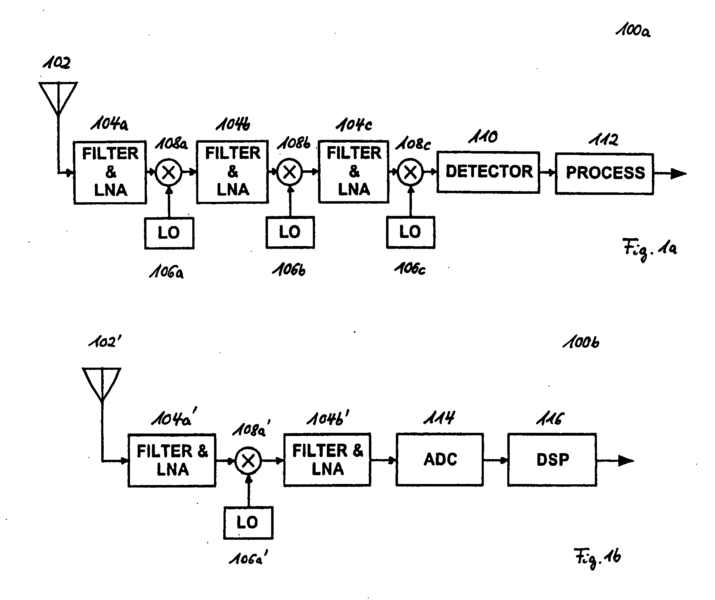

A block diagram of a conventional IF sampling receiver according to the state of the art is shown in Fig. 1b. Thereby, received RF signals are first down-converted to an intermediate frequency (IF), which is performed by the down-conversion mixer 108a'. After that, the obtained IF signal is further down-converted to the baseband by means of a digital signal processor 116 (DSP). It can thus be seen that this IF sampling receiver is actually a triple-conversion superheterodyne receiver. However, one difference between these two receiver architectures is that, due to the absence of IF stages, all of the conversion gain must take place prior to the ADC, either in the RF section before or in the IF stages after the down-conversion mixer 108a'. This requires that the selected components have a high third-order intercept point (IP3) - a standard reference number used to calculate intermodulation distortions, which indicates how well a receiver performs in the presence of strong interfering adjacent channels - since all channel selection is performed in the digital domain.

Low-IF receivers are a special case of the superheterodyne receiver architecture. Thereby, the desired RF signal spectrum is down-converted to an IF close to the baseband where the signal is then filtered before being demodulated. A low-IF receiver is not sensitive to parasitic effects such as DC offset voltages and self-mixing products and can be implemented in a highly integrated way. However, this receiver architecture severely suffers from image signals coming from adjacent channels which can not totally be removed by RF band-pass filtering.

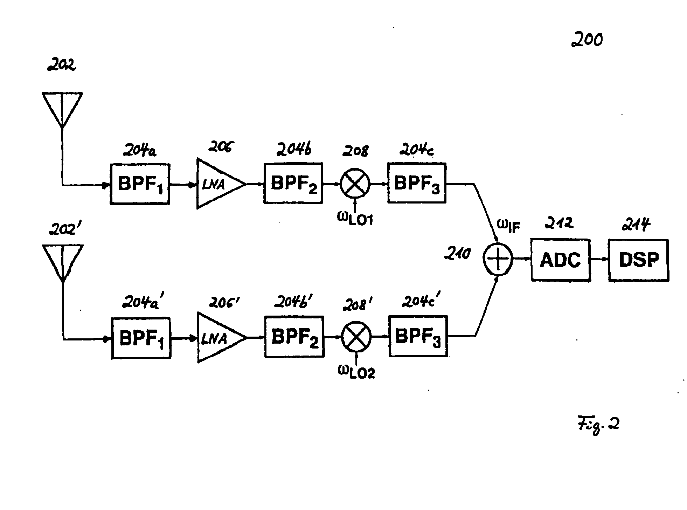

Fig. 2 illustrates a conceptual example of a dual-band receiver architecture 200 where two heterodyne receivers are deployed to translate the frequency bands of two different cellular standards (GSM/GPRS 850 and 900 MHz Rx, GSM/GPRS (DCS/PCS) 1,800 and 1,900 MHz Rx) to a common intermediate frequency (IF). These two standards thereby incorporate identical multiple access and duplexing techniques, channel bandwidths, and modulation formats. After a channel selection filtering is performed to attenuate spurious out-of-band components in the signal spectrum of the obtained IF signals, these two signal paths are merged. Sharing a single analog-to-digital converter 212 and a single digital signal processor 214 between the two frequency bands, this architecture nonetheless requires a large number of external, expensive analog hardware components as well as driving and sensing compliance with standard impedance levels. In addition, tradeoffs between image rejection and channel selection often require a second down-conversion mixer in each path, which further increases hardware complexity.

To achieve multi-standard capability, more flexible transceiver architectures are necessary. Reconfigurable (software-defined) radio systems, which are currently being developed, enable mobile transceiver to adapt to different cellular standards. This is possible by the use of programmable hardware components (e.g. FPGAs, PALS, PLDs, etc.) to which relevant software-defined radio functions can be downloaded. For base stations, where power consumption and size is less restricted than in mobile terminals, SDR components are already available on the market, i.e. for Wideband Code-Division Multiple Access (W-CDMA) applications. More radio functions being defined in software and hence encapsulated in the digital domain of the receiver imply that a more flexible radio transceiver design is possible. SDR requires to place the analog-to-digital converter (ADC) which is used to digitize received signals as close to the receive antenna as possible such that as many radio functions as possible can be defined in software and executed by programmable hardware components. The sooner the desired signal is digitized, the better. Once in digital domain, the signal can easily be tuned, filtered and processed.

In his article "Software-Defined Radio: Facets of a Developing Technology" (IEEE Personal Communications, pp. 38-44, Apr. 1999), the author W. Tuttlebee explains the idea of a software receiver which is able to operate with different mobile communication standards by means of software programming. As described in "Wide-Dynamic-Range A/D Converters Pave the Way for Wideband Digital Radio Receivers" (EDN Mag., pp. 187-203, November 1996) by B. Brannon, efforts have been made to place the ADC close to the antenna. This, however, involves some serious drawbacks: First, as the ADC would be exposed to many different signal and interference, an ADC with a wide dynamic range would be necessary. Second, the ADC should provide this dynamic range at RF frequencies. In their article "System design considerations of wideband multi-standard receiver for 3rd generation mobile system applications" the authors W. Sheng and E. Sánchez-Sinencio explain that a 16-bits ADC at 2 GHz is needed to operate with a multi-standard signal, which does not seem to be feasible today.

Alternatives to the superheterodyne receiver that may be suitable for software radios are receiver architectures employing direct-conversion and band-pass sampling. Both methods reduce the number of analog components, wherein band-pass sampling allows digitization further up the receive chain and down-conversion of the signal to a low IF without the use of down-conversion mixers. However, the sampling process is never ideal since many factors limit performance. One of these limiting factors is the aperture jitter in the sample-and-hold function of the applied ADC - the variation of the sampling period from one sample to another, which becomes more serious at high sampling rates.

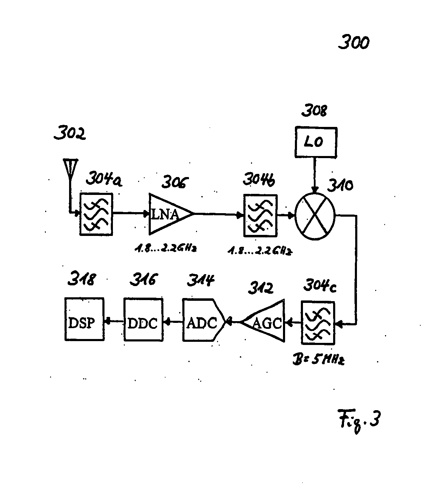

A more practical approach is the implementation of an IF sampling receiver. A block diagram of a conventional IF sampling receiver 300 according to the state of the art is shown in Fig. 3. The analog front end of this receiver architecture 300 consists of a duplexer filter 304a, a wideband low-noise amplifier 306 (LNA), an image-reject filter 304b, a down-conversion mixer 310, a channel-select filter 304c, an amplifier 312 with automatic gain control (AGC), and an analog-to-digital converter 314 (ADC) with high sampling rate $f_s$ and high quantization resolution $R$. It is followed by a digital down-converter 316 (DDC) connected to a digital signal processor 318 (DSP). A received multi-standard RF signal spectrum is amplified by the LNA 306 and down-converted to an intermediate frequency (IF) band by the mixer 310. The choice of an adequate IF is a compromise between image rejection and ADC requirements. A high IF relaxes the image-reject filter specifications, but places critical demands on the performance of the ADC 314 and the subsequent DSP 318. After down-conversion of the received RF signal the channel-select filter 304c limits the obtained IF signal to the UMTS channel bandwidth ($B$ = 5 MHz). Finally, a wideband ADC 314 is used to digitize the band-pass-filtered and amplified IF signal. The DDC 316 performs digital processing tasks such as digital down-conversion, filtering and sampling rate adaptation. It can be programmed for usage in different radio standards and has a lower power consumption than conventional DSPs doing the same tasks. The DSP 318 is responsible for channel estimation and equalization, channel and source coding/decoding, etc.

Compared to other receiver architectures such as direct-conversion receivers and double-conversion wideband IF receivers, a digital IF sampling receiver architecture has several advantages: First, an IF sampling receiver does not suffer from DC offset and $1/f$ flicker noise as well as I/Q mismatching problems. Moreover, there is no need for analog matching means to enhance image rejection. Since the ADC is placed closer to the antenna than in other receiver architectures, more radio functions can be written in software (software-defined radio, SDR) and embedded in a programmable logic device. The flexibility of the radio terminal to adapt to different systems or to advances in services or technology is made possible by using reconfigurable hardware components such as digital signal processors (DSP), field-programmable gate arrays (FPGA), etc. This flexibility also relies on the radio to be wideband in nature and as linear as possible, so as to minimize distortion of the signal. However, ADC performance still is not sufficient enough to perform digitization at RF. In particular, the analog input bandwidth, sampling rate, dynamic range and therefore quantization resolution of the ADC have to be improved significantly if wideband front ends and sampling at RF are to become a reality. As a result of placing the ADC closer to the antenna, the DSP must be able to cope with an increased amount of programmable radio functionality. It is needless to say that power consumption of all components of an SDR is a very important factor to consider, particularly in hand-held terminals.

WO 99/66646 refers to a radio receiver architecture comprising a first and a second front-end circuitry optimized for receiving modulated RF signals in a first and a second frequency band, respectively. Each front end includes a mixer for down-converting received RF signals to a respective intermediate frequency ($IF_1$ and $IF_2$) for further processing and an own IF band-pass filter. The down-converted and band-pass-filtered signals are then passed to a single analog-to-digital converter (ADC). The sampling rate $f_s$ of the ADC and the intermediate frequencies $IF_1$ and $IF_2$ are chosen such that the received signals appear in the alias responses of the ADC at different multiples of $f_s$. This has the advantage that only one ADC has to be provided for the receiver circuitry, while still allowing the choice of intermediate frequencies which can be close to optimal for the received frequency band.

A dual-band transceiver architecture for mobile terminals as well as a method for processing GSM/GPRS, DCS and UMTS signals by one channel after being up-converted to a common intermediate frequency are disclosed in US 6,215,988. The disadvantage of this architecture, however, is the possibility to operate with GSM/GPRS and DCS signals only. It includes a controller for outputting a band signal for specifying operation in a first or a second, higher frequency band, a single frequency synthesizer which is responsive to the band signal for outputting an RF signal in one of said two frequency bands, and an RF transceiver comprising a dual-band receiver and a dual-band transmitter that respectively receive or transmit RF signals in said first and second frequency band. According to one embodiment of this invention, the dual-band receiver includes a first reception chain operating in the first frequency band as a single-conversion receiver, which comprises a down-conversion mixer preceded by a first and followed by a second band-pass filter, and a second reception chain operating in the second frequency band as a dual-conversion superheterodyne receiver, which comprises a first down-conversion mixer preceded by a first and followed by a second band-pass filter. Said second band-pass filter is coupled to a second down-conversion mixer followed by a third band-pass filter. In order to achieve savings in cost, complexity, size, and power consumption, the down-conversion mixer of the single-conversion receiver is also used as second down-conversion mixer of the dual-conversion superheterodyne receiver and the second band-pass filter of the single-conversion receiver is also used as third band-pass filter of the dual-conversion superheterodyne receiver. According to a further embodiment of the invention described in US 6,215,988, the dual-band transmitter includes a modulator that outputs a modulated RF signal. When operating in the first frequency band, the input RF signal to the modulator has a frequency that is equal to the transmitted RF signal, and when operating in the second frequency band, the input RF signal has a frequency that is equal to one half of the transmitted RF signal.

In US 5,794,159 a multi-mode radiotelephone comprising at least one antenna for transmitting and receiving RF signals within at least two frequency bands is disclosed. The radio-telephone also includes a first and a second receiver having each an input coupled to the antenna for amplifying and down-converting RF signals within a first or second frequency band, respectively. Moreover, said radiotelephone includes a first and a second transmitter having each an input coupled to the antenna for up-converting and amplifying RF signals within said first or second frequency band In accordance with this invention, the first receiver and the second transmitter are disposed within a first circuit block, and the second receiver and the first transmitter are disposed within a second circuit block.

OBJECT OF THE UNDERLYING INVENTION

In view of the above-described state of the art, it is the object of the present invention to provide a cost-effective, energy-saving multi-band receiver circuitry with small chip space.

The receiver should f.e. cope with downlink signals whose frequencies take on values from the GSM/GPRS 850 MHz Rx, GSM/GPRS 900 MHz Rx or the GSM/GPRS (DCS) 1,800 MHz Rx, GSM/GPRS (PCS) 1,900 MHz Rx, and UMTS TDD Rx frequency range, respectively.

The aforementioned object is achieved by means of the features describes in the independent claims. Advantageous features are defined in the subordinate claims.

SUMMARY OF THE INVENTION

The underlying invention is basically dedicated to an analog front end of a digital dual-mode intermediate frequency sampling receiver with two reception chains and a common signal processing chain for selectively receiving, processing and down-converting modulated RF signal spectra of two frequency bands from the passband to an intermediate frequency (IF) band, which can advantageously be applied to a wireless communication device in a cellular telecommunication system based f.e. on UMTS or GSM/GPRS technology. The obtained IF signal spectra are then digitized with the aid of a common sigma-delta analog-to-digital converter (SDADC) whose sampling rate $f_s$ and quantization resolution $R$ can be adapted to the bandwidth $B$ and the required dynamic range $SIN$ of said IF signal spectra, respectively.

The proposed IF sampling receiver architecture thereby comprises means for up-converting the modulated RF signal spectrum of a second frequency band (GSM/GPRS 850 MHz Rx and GSM/GPRS 900 MHz Rx) to a first frequency band (GSM/GPRS (DCS) 1,800 MHz Rx, GSM/GPRS (PCS) 1,900 MHz Rx, UMTS TDD1/2 Rx, UMTS FDD Rx) as well as switching means for selectively switching either the modulated RF signal spectrum of said first or said second frequency band to a common signal processing chain for further processing.

BRIEF DESCRIPTION OF THE DRAWINGS

Advantageous features and aspects of the present invention will become evident from the following description, the appended claims, and the accompanying drawings, wherein the invention is explained in more detail. Thereby,

Fig. 1a     shows a schematic block diagram of a conventional superheterodyne receiver architecture with three intermediate frequency (IF) stages (a so-called triple-conversion receiver) according to the state of the art,

Fig. 1b     shows a schematic block diagram of a conventional intermediate frequency (IF) sampling receiver architecture according to the state of the art,

Fig. 2     presents a schematic block diagram exhibiting a conceptual example of a conventional dual-band receiver architecture according to the state of the art,

Fig. 3     shows a schematic block diagram of a digital intermediate frequency (IF) sampling receiver according to the state of the art, which is capable of receiving frequencies of spectral components within a frequency band (GSMIGPRS (DCS) 1,800 MHz Rx, GSM/GPRS (PCS) 1,900 MHz Rx, UMTS TDD1/2 Rx, UMTS FDD Rx) ranging from 1,805 MHz to 2,170 MHz, and

Fig. 4     depicts an analog front end of a digital dual-mode intermediate frequency (IF) sampling receiver architecture with two reception chains and one signal processing chain for alternatively receiving, processing and down-converting modulated RF signal spectra of a first (GSM/GPRS (DCS) 1,800 MHz Rx, GSM/GPRS (PCS) 1,900 MHz Rx, UMTS TDD1/2 Rx, UMTS FDD Rx) or second frequency band (GSM/GPRS 850 MHz Rx, GSM/GPRS 900 MHz Rx), respectively, from the passband to an intermediate frequency (IF) band.

DETAILED DESCRIPTION OF THE UNDERLYING INVENTION

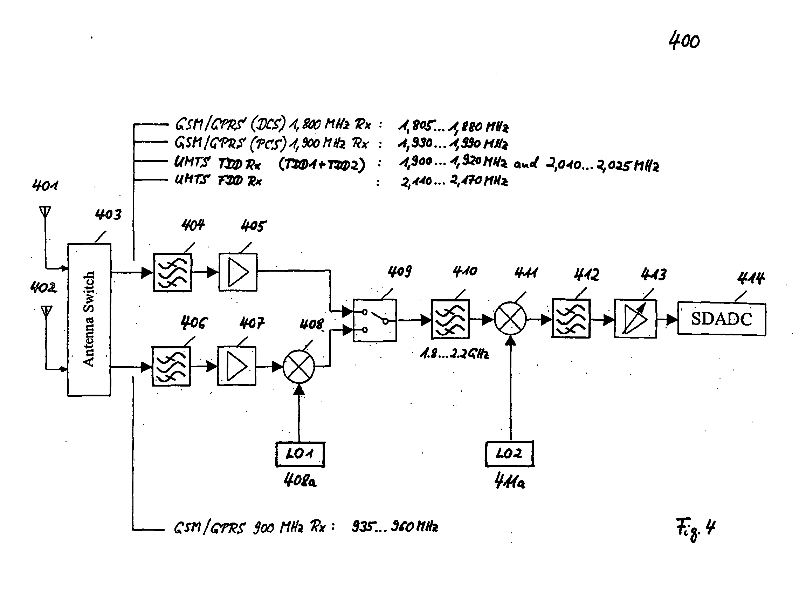

In the following, one embodiment of the underlying invention as depicted in Fig. 4 shall be explained in detail. The meaning of the symbols designated with reference numerals and signs in Figs. 1a to 4 can be taken from an annexed table.

A first embodiment of the present invention pertains to an analog front end of a digital dual-mode intermediate frequency sampling receiver as depicted in Fig. 4 having two reception chains (401, 403, 404, 405 and 401, 403, 406, 407) and one signal processing chain (410, 411, 412, 413) for alternatively receiving, processing and down-converting modulated RF signal spectra of a first (f.e. GSM/GPRS (DCS) 1,800 MHz Rx, GSM/GPRS (PCS) 1,900 MHz Rx, UMTS TDD1/2 Rx, UMTS FDD Rx) or second frequency band (f.e. GSM/GPRS 850 MHz Rx, GSM/GPRS 900 MHz Rx), respectively, from the passband to a (common) intermediate frequency (IF) band.

The analog front end 400 comprises a first mixing stage 411 connected to a first frequency synthesizer 411a providing a sinusoidal oscillator signal with a constant frequency for a down-conversion of received RF signals from the passband to an IF band for further signal processing, amplification stages 405, 407, and 413 for amplifying the signal amplitudes of the obtained RF and/or IF signals, two band-select filters 404 and 405, which are placed at the input ports of said reception chains, respectively, and at least one IF channel-select filter 412 for attenuating spurious out-of-band components contained in the signal spectra of the RF and/or IF signals, which is placed at the output port of said first mixing stage 411.

Furthermore, it comprises at least one image-reject filter 410 with a passband ranging f.e. from 1.8 GHz to 2.2 GHz preceding said first mixing stage 411 for suppressing image frequencies in the obtained IF signal spectrum. As shown in US 6,215,988. an IF of 312 MHz, which is obtained at the output port of the down-conversion mixer 411 of the proposed IF sampling receiver 400, is suited for receiving RF signals in the range of the above-mentioned frequency bands.

The analog front end additionally comprises switching means 409 for selectively switching (S2) either said first (401, 403, 404, 405) or said second reception chain (401, 403, 406, 407) to the common signal processing chain (410, 411, 412, 413) for a down-conversion of said first or second RF signal spectrum from the passband to said IF band, respectively, as well as a second mixing stage 408 connected to a second frequency synthesizer 408a which provides a sinusoidal oscillator signal with a constant carrier frequency for an up-conversion (S1) of the RF signal spectrum of said second frequency band (GSM/GPRS 850 MHz Rx, GSM/GPRS 900 MHz Rx) to said first frequency band (GSM/GPRS (DCS) 1,800 MHz Rx, GSM/GPRS (PCS) 1,900 MHz Rx, and UMTS TDD1/2 Rx, UMTS FDD Rx). Thereby, said second mixing stage 408 is connected to an input port of said switching means 409.

According to a further aspect of the present invention, a sigma-delta analog-to-digital converter 414 (SDADC) is connected to the output port of the signal processing chain (410, 411, 412, 413), which provides a time- and amplitude-quantized time-domain representation of the down-converted RF signal spectrum of either said first or said second frequency band. An SDADC is an oversampling noise-shaping ADC that is equipped with a sigma-delta modulator (SDM), which performs an oversampling and uses a low-resolution converter in a noise-shaping loop to shape quantization noise power out of band, and a so-called decimator - a digital filter followed by a down-sampler, that is needed to reduce the oversampling ratio M introduced by the SDM. Although the decimator is a digital filter, it functionally belongs to the digital front end. The analog-to-digital conversion itself takes place in the SDM, which can be regarded as a digital filter with two input ports and a quantizer. In the SDM two digital modulators are implemented in switched-capacitor (SC) technique, one for the in-phase (I) and one for the quadrature (Q) channel. The circuit contains a common sampling and mixing input stage converting a single continuous time-domain input signal at an intermediate frequency into discrete time-interleaved I and Q baseband signals. According to one approach of the present invention, said SDPC 414 is adapted to change the sampling rate $f_s$ of the time quantization based on the signal bandwidth $B$ of the obtained IF signal spectrum in such a way that a predefined oversampling ratio ($M > 2$) is attained and thus the Nyquist sampling theorem

$$f_s \geq M \cdot B \text{ with } M := 2,$$

wherein $M$ denotes the applied sampling factor, is fulfilled. It is further adapted to change the resolution $R$ of the amplitude quantization (the number of bits used to represent each sample value) executed by means of said sigma-delta analog-to-digital converter 414 dependent on the required dynamic range $SIN$ of the obtained IF signal spectrum and thus dependent on the bandwidth $B$ of the channel used for the reception of the associated RF signal spectrum. For instance, from US 6,215,988 it is known that an analog-to-digital converter with a dynamic range of approximately 86 dB is required for the DCS 1,800 MHz Rx frequency band. For the UMTS frequency band, however, the required dynamic range for the employed SDADC is much smaller than in the case of DCS since the channel-select filter 412 just passes one single UMTS channel and attenuates all adjacent channels.

Thereby, the passbands of the channel-select filtering means 404 and 405 are respectively set such that frequencies of spectral components within said first frequency band (GSM/GPRS (DCS) 1,800 MHz Rx, GSM/GPRS (PCS) 1,900 MHz Rx, UMTS TDD1/2 Rx, UMTS FDD Rx), which take on values from a first frequency interval ranging from 1,805 to 2,170 MHz, and frequencies of spectral components within said second frequency band (GSM/GPRS 850 MHz RX, GSM/GPRS 900 MHz Rx), which take on values from a second frequency interval ranging from 869 to 960 MHz, are passed.

A second embodiment of the present invention refers to a method for selectively receiving, processing and down-converting modulated RF signal spectra of a first (GSN1/ GPRS (DCS) 1,800 MHz Rx, GSM/CrPRS (PCS) 1,900 MHz Rx, UMTS TDD1/2 Rx, UMTS FDD Rx) or a second frequency band (GSM/GPRS 850 MHz Rx, GSM/GPRS 900 MHz Rx), respectively, from the passband to an intermediate frequency (IF) band. Said method is characterized by the steps of up-convening (S1) the modulated RF signal spectrum of said second frequency band to said first frequency band and selectively switching (S2) either the modulated RF signal spectrum of said first frequency band or the modulated RF signal spectrum of said second frequency band to a common signal processing chain (410, 411, 412, 413) for further processing.

In this connection, the time-domain representation of a down-converted RF signal is submitted to a time quantization where the sampling rate $f_s$ of the time quantization is adapted (S3) to the bandwidth $B$ of the obtained IF signal spectrum such that a predefined oversampling ratio $M$ is attained and thus the Nyquist sampling theorem is fulfilled. Furthermore, the resolution $R$ of the amplitude quantization is set (S4) dependent on the respectively required dynamic range $SIN$ of the obtained IF signal spectrum and thus dependent on the bandwidth $B$ of the channel used for the reception of the associated RF signal spectrum.

A third embodiment of the present invention is related to a digital dual-mode intermediate frequency sampling receiver architecture which comprises an analog front end 400 as described above for selectively receiving, processing and down-converting modulated RF signal spectra of a first (GSM/GPRS (DCS) 1,800 MHz Rx, GSM/GPRS (PCS) 1,900 MHz Rx, UMTS TDD1/2 Rx, UMTS FDD Rx) or second frequency band (GSM/GPRS 850 MHz Rx, GSM/ GPRS 900 MHz Rx), respectively, from the passband to an intermediate frequency (IF) band. The invention is furthermore directed to a mobile telecommunications device comprising a digital dual-mode intermediate frequency sampling receiver architecture as described above.

Table:

| No. | System Component or Procedure Step |
|---|---|
| **Depicted Features and their Corresponding Reference Signs** | |
| 100a | schematic block diagram showing a conventional superheterodyne receiver architecture with three intermediate frequency (IF) stages (triple-conversion receiver) according to the state of the art |
| 100b | schematic block diagram showing a conventional intermediate frequency (IF) sampling receiver architecture according to the state of the art |
| 102 | receive (Rx) antenna of the superheterodyne receiver architecture 100a |
| 102' | receive (Rx) antenna of the IF sampling receiver architecture 100b |
| 104a | first combined filtering and amplification unit of the superheterodyne receiver architecture 100a , comprising an image-reject filter and a low-noise amplifier (LNA$_1$) |
| 104a' | first combined filtering and amplification unit of the IF sampling receiver architecture 100b, comprising an image-reject filter and a low-noise amplifier (LNA$_1$) |
| 104b | second combined filtering and amplification unit of the superheterodyne receiver architecture 100a , comprising a channel-select filter and a low-noise amplifier (LNA$_2$) |
| 104b' | second combined filtering and amplification unit of the IF sampling receiver architecture 100b, comprising a channel-select filter and a low-noise amplifier (LNA$_2$) |
| 104c | third combined filtering and amplification unit of the superheterodyne receiver architecture 100a , comprising a channel-select filter and a low-noise amplifier (LNA$_3$) |
| 106a | first local oscillator of the superheterodyne receiver architecture 100a , which provides a sinusoidal oscillator signal with a tunable frequency |
| 106a' | local oscillator of the IF sampling receiver architecture 100b, which provides a sinusoidal oscillator signal with a constant frequency |
| 106b | second local oscillator of the superheterodyne receiver architecture 100a , which provides a sinusoidal oscillator signal with a fixed frequency |

Table:   (continued)

| No. | System Component or Procedure Step |
|---|---|
| **Depicted Features and their Corresponding Reference Signs** |

| No. | System Component or Procedure Step |
|---|---|
| 106c | third local oscillator of the superheterodyne receiver architecture 100a , which provides a sinusoidal oscillator signal with a fixed frequency |
| 108a | first down-conversion mixer of the superheterodyne receiver architecture 100a |
| 108a' | down-conversion mixer of the IF sampling receiver architecture 100b |
| 108b | second down-conversion mixer of the superheterodyne receiver architecture 100a |
| 108c | third down-conversion mixer of the superheterodyne receiver architecture 100a |
| 110 | detector means of the superheterodyne receiver architecture 100a |
| 112 | digital signal processing means of the superheterodyne receiver architecture 100a |
| 114 | analog-to-digital converter (ADC) of the IF sampling receiver architecture 100b |
| 116 | digital signal processor (DSP) of the IF sampling receiver architecture 100b for further signal processing |
| 200 | schematic block diagram showing a conceptual example of a conventional dual-band receiver architecture according to the state of the art |
| 202 | receive (Rx) antenna of the first reception chain of the dual-band receiver architecture 200 for receiving RF signal spectra from a first frequency band |
| 202' | receive (Rx) antenna of the second reception chain of the dual-band receiver architecture 200 for receiving RF signal spectra from a second frequency band |
| 204a | band-select filter (BPF$_1$) of the first reception chain of the dual-band receiver architecture 200 for attenuating spurious out-of-band components contained in the signal spectrum of a received RF signal |
| 204b | image-reject filter (BPF$_2$) of the first reception chain of the dual-band receiver architecture 200 for suppressing image frequencies in an obtained IF signal spectrum |
| 204c | channel-select filter (BPF$_3$) of the first reception chain of the dual-band receiver architecture 200 for attenuating spurious out-of-band components contained in the signal spectrum of an obtained IF signal |
| 204a' | band-select filter (BPF$_1$) of the second reception chain of the dual-band receiver architecture 200 for attenuating spurious out-of-band components contained in the signal spectrum of a received RF signal |
| 204b' | image-reject filter (BPF$_2$) of the second reception chain of the dual-band receiver architecture 200 for suppressing image frequencies in an obtained IF signal spectrum |
| 204c' | channel-select filter (BPF$_3$) of the second reception chain of the dual-band receiver |
| 206 | low-noise amplifier (LNA) of the first reception chain of the dual-band receiver 200 |
| 206' | low-noise amplifier (LNA) of the second reception chain of the dual-band receiver 200 |
| 208 | down-conversion mixer of the first reception chain of the dual-band receiver 200 |
| 208' | down-conversion mixer of the second reception chain of the dual-band receiver 200 |
| 210 | summation element for merging the IF signals of both reception chains after channel selection is performed |
| 212 | analog-to-digital converter (ADC) of the dual-band receiver architecture 200 |
| 214 | digital signal processing (DSP) means of the dual-band receiver architecture 200 |
| 300 | schematic block diagram showing a conventional digital intermediate frequency (IF) sampling receiver, which is capable of receiving frequencies of spectral components within a frequency band (GSM/GPRS (DCS) 1,800 MHz Rx, GSM/GPRS (PCS) 1,900 MHz Rx, UMTS TDD1/2 Rx, and UMTS FDD Rx) ranging from 1,805 MHz to 2,170 MHz |
| 302 | receive (Rx) antenna of the digital IF sampling receiver 300 |

Table: (continued)

| Depicted Features and their Corresponding Reference Signs | |
|---|---|
| No. | System Component or Procedure Step |
| 304a | duplexer filter of the digital IF sampling receiver 300, serving as a band-select filter for attenuating spurious out-of-band components contained in the signal spectrum of a received RF signal from said frequency band |
| 304b | image-reject filter for suppressing image frequencies in an obtained IF signal spectrum by band-pass filtering the signal spectrum of the received RF signal, whose passband ranges from 1.8 GHz to 2.2 GHz |
| 304c | channel-select filter for attenuating spurious out-of-band components contained in the signal spectrum of an obtained IF signal, having a passband of 5 MHz bandwidth |
| 306 | low-noise amplifier (LNA) of the digital IF sampling receiver 300, used for an amplification of received RF signals within a frequency interval ranging from 1.8 GHz to 2.2 GHz |
| 308 | local oscillator of the digital IF sampling receiver 300, which provides a sinusoidal oscillator signal with a fixed frequency |
| 310 | down-conversion mixer of the digital IF sampling receiver 300 |
| 312 | automatic gain control (ADC) amplifier of the digital IF sampling receiver 300 |
| 314 | analog-to-digital converter (ADC) of the digital IF sampling receiver 300 |
| 316 | digital down-conversion (DDC) means of the digital IF sampling receiver 300 |
| 318 | digital signal processing (DSP) means of the digital IF sampling receiver 300 for further signal processing |
| 400 | analog front end of a digital dual-mode intermediate frequency (IF) sampling receiver architecture with two reception chains (401, 403, 404, 405 and 401, 403, 406, 407) and one signal processing chain (410, 411, 412, 413) for alternatively receiving, processing and down-converting modulated RF signal spectra of a first (GSM/GPRS (DCS) 1,800 MHz Rx, GSM/GPRS (PCS) 1,900 MHz Rx, UMTS TDD1/2 Rx, UMTS FDD Rx) or second frequency band (GSM/GPRS 850 MHz Rx, GSM/GPRS 900 MHz Rx), respectively, from the passband to an intermediate frequency (IF) band |
| 401 | first receive (Rx) antenna for receiving modulated RF signals of a first frequency band (GSM/GPRS (DCS) 1,800 MHz Rx, GSM/GPRS (PCS) 1,900 MHz Rx, UMTS TDD 1/2 Rx, UMTS FDD Rx) |
| 402 | second receive (Rx) antenna for receiving modulated RF signals of a second frequency band (GSM/GPRS 850 MHz Rx, GSM/GPRS 900 MHz Rx) |
| 403 | antenna switch used for selectively receiving modulated RF signals of said first (GSM/GPRS (DCS) 1,800 MHz Rx, GSM/GPRS (PCS) 1,900 MHz Rx, UMTS TDD1/2 Rx, UMTS FDD Rx) or said second frequency band (GSM/GPRS 850 MHz Rx, GSM/GPRS 900 MHz Rx) |
| 404 | band-select filter ($BPF_1$) placed at the input port of the first reception chain for attenuating spurious out-of-band components contained in the signal spectrum of the first RF signal, whose passband is set such that frequencies of spectral components within said first frequency band (GSM/GPRS (DCS) 1,800 MHz Rx, GSM/GPRS (PCS) 1,900 MHz Rx, UMTS TDD1/2 Rx, UMTS FDD RxJ take on values from a first frequency interval ranging from 1,805 MHz to 2,170 MHz |
| 405 | low-noise amplifier ($LNA_1$) of a first reception chain for amplifying the signal amplitudes of a received RF signal spectrum whose frequencies take on values from said first frequency band (GSM/GPRS (DCS) 1,800 MHz Rx, GSM/GPRS (PCS) 1,900 |
| 406 | band-select filter ($BPF_2$) at the input port of the second reception chain for attenuating spurious out-of-band components contained in the signal spectrum of the second RF signal, whose passband is set such that frequencies of spectral components within said second frequency band (GSM/GPRS 850 MHz Rx, GSM/GPRS 900 MHz Rx) take on values from a second frequency interval ranging from 869 MHz to 960 MHz |
| 407 | low-noise amplifier ($LNA_2$) of a second reception chain for amplifying the signal amplitudes of a received RF signal spectrum whose frequencies take on values from said second frequency band (GSMIGPRS 850 MHz Rx, GSM/GPRS 900 MHz Rx) |

Table: (continued)

| Depicted Features and their Corresponding Reference Signs | |
|---|---|
| No. | System Component or Procedure Step |
| 408 | second mixing stage, connected to a second frequency synthesizer 408a for an up-conversion of the RF signal spectrum of said second frequency band (GSM/GPRS 850 MHz Rx, GSM/GPRS 900 MHz Rx) to said first frequency band (GSMIGPRS (DCS) 1,800 MHz Rx, GSM/GPRS (PCS) 1,900 MHz Rx, UMTS TDD1/2 Rx, UMTS FDD Rx), wherein said second mixing stage 408 is connected to an input port of said switching means 409 |
| 408a | second frequency synthesizer, which provides a sinusoidal oscillator signal with a constant carrier frequency |
| 409 | switching means for selectively switching either said first (401, 403, 404, 405) or said second reception chain (401, 403, 44D6, 407) to the common signal processing chain (410, 411, 412, 413) for a down-conversion of said first or second RF signal spectrum from the passband to said IF band, respectively |
| 410 | image-reject filter preceding said first mixing stage 411 for suppressing image frequencies in the obtained IF signal spectrum |
| 411 | first mixing stage, connected to a first frequency synthesizer 411a for a down-conversion of received RF signals from the passband to an IF band for further signal processing |
| 411a | first frequency synthesizer, which provides a sinusoidal oscillator signal with a constant frequency |
| 412 | IF channel-select filter for removing spurious out-of-band harmonics contained in the obtained IF signal spectrum |
| 413 | variable-gain amplifier (VGA) for amplifying the signal amplitudes of the obtained IF signal spectrum at the output port of the IF band-pass filter 412 |
| 414 | sigma-delta analog-to-digital converter (SDADC) connected to the output port of the signal processing chain (410, 411, 412, 413), which provides a time- and amplitude-quantized time-domain representation of the down-converted RF signal spectrum of either said first (GSM/GPRS (DCS) 1,800 MHz Rx, GSM/GPRS (PCS) 1,900 MHz Rx, UMTS TDD1/2 Rx, UMTS FDD Rx) or said second frequency band (GSM/GPRS 850 MHz Rx, GSM/GPRS 900 MHz Rx) |
| S1 | step #1: up-converting the modulated RF signal spectrum of said second frequency band (GSM/GPRS 850 MHz Rx, GSM/GPRS 900 MHz Rx) to said first frequency band (GSM/GPRS (DCS) 1,800 MHz Rx, GSM/GPRS (PCS) 1,900 MHz Rx, UMTS TDD1/2 Rx, UMTS FDD Rx) |
| S2 | step #2: selectively switching either the modulated RF signal spectrum of said first frequency band (GSM/GPRS (DCS) 1,800 MHz Rx, GSM/GPRS (PCS) 1,900 MHz Rx, UMTS TDD1/2 Rx, UMTS FDD Rx) or the modulated RF signal spectrum of said second frequency band (GSM/GPRS 850 MHz Rx, GSM/GPRS 900 MHz Rx) to a common signal processing chain (410, 411, 412, 413) for further processing |
| S3 | step #3: adapting the sampling rate of the time quantization to the bandwidth of the obtained IF signal spectrum such that a predefined oversampling rate is attained and thus the Nyquist sampling theorem is fulfilled |
| S4 | step #4: setting the resolution of the amplitude quantization dependent on the respectively required dynamic range of the obtained IF signal spectrum and thus dependent on the bandwidth of the channel used for the reception of the associated RP signal spectrum |

**Claims**

1. An analog front end of a digital dual-mode intermediate frequency sampling receiver with two reception chains (401, 403, 404, 405 and 401, 403, 406, 407) and one signal processing chain (410, 411, 412, 413) for selectively receiving, processing and down-converting modulated RF signal spectra of a first (GSM/GPRS (DCS) 1,800 MHz Rx, GSM/GPRS (PCS) 1,900 MHz Rx, UMTS TDD1/2 Rx, UMTS FDD Rx) or a second frequency band (GSM/GPRS 850 MHz Rx, GSM/OPRS 900 MHz Rx), respectively, from the passband to a common intermediate frequency (IF) band, comprising

- a mixing stage (411) connected to a frequency synthesizer (411a) providing a signal with essentially constant frequency for a down-conversion of received RF signals from the passband to an IF band for further signal processing,
- amplification stages (405, 407, 413) for amplifying the signal amplitudes of the obtained RF and/or IF signals, and
- two band-select filters (404, 405) placed at the input ports of said reception chains, respectively, and at least one IF channel-select filter (412) placed at the output port of said mixing stage (411) for attenuating spurious out-of-band components contained in the signal spectra of the RF and/or IF signals as well as at least one image-reject filter (410) preceding said mixing stage (411) for suppressing image frequencies in the obtained IF signal spectrum,

**characterized by**

- switching means (409) for selectively switching (S2) either said first (401, 403, 404, 405) or said second reception chain (401, 403, 406, 407) to the common signal processing chain (410, 411, 412, 413) for a down-conversion of said first or second RF signal spectrum from the passband to said IF band, respectively, and
- a further mixing stage (408) connected to a further frequency synthesizer (408a) providing a furthersignal with essentially constant carrier frequency for an up-conversion (S1) of the RF signal spectrum of said second frequency band (GSM/GPRS 850 MHz Rx, GSM/GPRS 900 MHz Rx) to said first frequency band (GSM/GPRS (DCS) 1,800 MHz Rx, GSM/GPRS (PCS) 1,900 MHz Rx, UMTS TDD1/2 Rx, UMTS FDD Rx), wherein said further mixing stage (408) is connected to an input port of said switching means (409).

2. An analog front end according to claim 1,
comprising a sigma-delta analog-to-digital converter (414) connected to the output port of the signal processing chain (410, 411, 412, 413), which provides a time- and amplitude-quantized time-domain representation of the down-converted RF signal spectrum of either said first (GSM/GPRS (DCS) 1,800 MHz Rx, GSM/GPRS (PCS) 1,900 MHz Rx, UMTS TDD1/2 Rx, UMTS FDD Rx) or said second frequency band (GSM/GPRS 850 MHz Rx, GSM/GPRS 900 MHz Rx),
wherein said sigma-delta analog-to-digital converter (414) is adapted to change the sampling rate $(f_s)$ of the time quantization based on the signal bandwidth $(B)$ of the obtained IF signal spectrum in such a way that a predetermined oversampling ratio $(M)$ is attained and thus the Nyquist sampling theorem is fullfilled.

3. An analog front end according to claim 2,
**characterized in that**
the sigma-delta analog-to-digital converter (414) is further adapted to change the resolution $(R)$ of the amplitude quantization executed by means of said sigma-delta analog-to-digital converter (414) dependent on the required dynamic range $(SIN)$ of the obtained IF signal spectrum and thus dependent on the bandwidth $(B)$ of the channel used for the reception of the associated RF signal spectrum.

4. An analog front end according to anyone of the preceding claims,
**characterized in that**
the passbands of the channel-select filtering means (404, 405) are respectively set such that

- frequencies of spectral components within said first frequency band (GSM/GPRS (DCS) 1,800 MHz Rx, GSM/GPRS (PCS) 1,900 MHz Rx, UMTS TDD1/2 Rx, UMTS FDD Rx), which take on values from a first frequency interval ranging from 1,805 MHz to 2,170 MHz, and
- frequencies of spectral components within said second frequency band (GSM/GPRS 850 MHz Rx, GSM/GPRS 900 MHz Rx), which take on values from a second frequency interval ranging from 869MHz to 960 MHz, are passed.

5. A method for selectively receiving, processing and down-converting modulated RF signal spectra of a first (GSM/GPRS (DCS) 1,800 MHz Rx, GSM/GPRS (PCS) 1,900 MHz Rx, UMTS TDD1/2 Rx, UMTS FDD Rx) or a second frequency band (GSM/GPRS 850 MHz RX, GSM/GPRS 900 MHz Rx), respectively, from the passband to a common intermediate frequency (IF) band,
**characterized by** the steps of:

- up-converting (S1) the modulated RF signal spectrum of said second frequency band (GSM/GPRS 850 MHz Rx, GSM/GPRS 900 MHz Rx) to said first frequency band (GSM/GPRS (DCS) 1,800 MHz Rx, GSM/GPRS (PCS) 1,900 MHz Rx, UMTS TDD1/2 Rx, UMTS FDD Rx) and

- selectively switching (S2) either the modulated RF signal spectrum of said first frequency band (GSM/GPRS (DCS) 1,800 MHz Rx, GSM/GPRS (PCS) 1,900 MHz Rx, UMTS TDD1/2 Rx, UMTS FDD Rx) or the modulated RF signal spectrum of said second frequency band (GSM/GPRS 850 MHz Rx, GSM/GPRS 900 MHz Rx) to a common signal processing chain (410, 411, 412, 413) for further processing.

6. A method according to claim 5,
   wherein the time-domain representation of a down-converted RF signal is submitted to a time quantization,
   **characterized by** the step of
   adapting (S3) the sampling rate ($f_s$) of the time quantization to the bandwidth ($B$) of the obtained IF signal spectrum such that a predefined oversampling ratio ($M$) is attained and thus the Nyquist sampling theorem is fulfilled.

7. A method according to claim 6,
   wherein the time-domain representation of a down-converted RF signal is submitted to an amplitude quantization,
   **characterized by** the step of
   setting (S4) the resolution ($R$) of the amplitude quantization dependent on the required dynamic range *(SIN)* of the obtuned IF signal spectrum and thus dependent on the bandwidth ($B$) of the channel used for the reception of the associated RF signal spectrum.

8. A digital dual-mode intermediate frequency sampling receiver for selectively receiving, processing and down-converting modulated RF signal spectra of a first (GSM/GPRS (DCS) 1,800 MHz Rx, GSM/GPRS (PCS) 1,900 MHz Rx, UMTS TDD1/2 Rx, UMTS FDD Rx) or second frequency band (GSM/GPRS 850 MHz Rx, GSM/GPRS 900 MHz Rx), respectively, from the passband to an intermediate frequency (IF) band,
   **characterized by**
   an analog front end (400) according to anyone of the claims 1 to 4.

9. A mobile telecommunications device,
   **characterized by**
   a digital dual-mode intermediate frequency sampling receiver architecture according to claim 8.

Fig. 1a

Fig. 1b

Fig. 2

300

308 LO

310

304b  1.8...2.2GHz

306 LNA  1.8...2.2GHz

304a

302

304c  B=5MHz

312 AGC

344 ADC

346 DDC

318 DSP

316

Fig.3

400

GSM/GPRS (DCS) 1,800 MHz Rx : 1,805...1,880 MHz
GSM/GPRS (PCS) 1,900 MHz Rx : 1,930...1,990 MHz
UMTS TDD Rx  (TDD1+TDD2) : 1,900...1,920 MHz and 2,010...2,025 MHz
UMTS FDD Rx  : 2,110...2,170 MHz

GSM/GPRS 900 MHz Rx : 935...960 MHz

401
402
403  Antenna Switch
404
405
406
407
408
408a  LO1
409
410  1,8...2,2 GHz
411
412
413
414  SDADC
414a  LO2

Fig. 4

16

## EUROPEAN SEARCH REPORT

**Application Number**

EP 03 00 9546

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 079 531 A (HITACHI EUROP GMBH) 28 February 2001 (2001-02-28) | 1,4,5,8, 9 | H04B1/40 H04B1/28 |
| Y | * abstract * * column 4, line 19 - column 8, line 50 * * figure 1 * | 2,3,6,7 | |
| Y | WO 03 030369 A (NOKIA CORP ;NOKIA INC (US)) 10 April 2003 (2003-04-10) | 2,3,6,7 | |
| A | * abstract * * page 4, line 1 - page 6, line 28 * * page 11, line 1 - page 14, line 6 * | 1,4,5,8, 9 | |

**TECHNICAL FIELDS SEARCHED (Int.Cl.7)**

H04B

The present search report has been drawn up for all claims

| Place of search | Date of completion of the search | Examiner |
|---|---|---|
| THE HAGUE | 17 September 2003 | Lindhardt, U |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 03 00 9546

This annex lists the patent family members relating to the patent documents cited in the above-mentioned European search report.
The members are as contained in the European Patent Office EDP file on
The European Patent Office is in no way liable for these particulars which are merely given for the purpose of information.

17-09-2003

| Patent document cited in search report | | Publication date | Patent family member(s) | | Publication date |
|---|---|---|---|---|---|
| EP 1079531 | A | 28-02-2001 | JP<br>EP | 2001044872 A<br>1079531 A2 | 16-02-2001<br>28-02-2001 |
| WO 03030369 | A | 10-04-2003 | US<br>WO | 6577258 B2<br>03030369 A2 | 10-06-2003<br>10-04-2003 |